# EUROPEAN PATENT APPLICATION

(11) **EP 3 486 705 A1**
(43) Date of publication of application: **22.05.2019**
(21) Application number: 17202071.1
(22) Date of filing: 16.11.2017
(51) Int. Cl.: G02B 21/16, G02B 21/36

(54) **A MULTI-MODE IMAGER**

(71) Applicant: Koninklijke Philips N.V., 5656 AE Eindhoven (NL)
(72) Inventor: BOAMFA, Marius Iosif, 5656 AE Eindhoven (NL); VAN DER ZAAG, Pieter Jan, 5656 AE Eindhoven (NL); LARSEN, Niels Agersnap, 5656 AE Eindhoven (NL); ASSELMAN, Michel Jozef Agnes, 5656 AE Eindhoven (NL); VULDERS, Roland Cornelis Martinus, 5656 AE Eindhoven (NL)
(74) Representative: de Haan, Poul Erik

(57) **Abstract**

Conventionally, the acquisition of bright-field images and fluorescence images using the same device has required an imager equipped with a mechanical movement, able to mechanically interchange filters in-between a sample stage and an imaging element, dependent on whether a bright-field or a fluorescence exposure is being made.

The present application discusses a multi-mode imager (30) comprising a bright-field light source (32) and a first excitation light source (34) for exciting fluorescent dyes in a biopsy sample (31). An optical filter arrangement (36, 36a, 36b, 36c) is provided enabling the multi-mode scanning of the biopsy without the need to use a mechanism for interchanging filters.

## Description

### FIELD OF THE INVENTION

The present invention relates to a multimode imager, optionally a microscope, for bright-field and fluorescent imaging, and an associated method, a digital pathology system, computer program element, and computer readable medium.

### BACKGROUND OF THE INVENTION

A biopsy imaging protocol may typically image an intact biopsy sample having a thickness between 0.5 to 1 mm. Before imaging, a biopsy sample is treated with a fluorescent dye which can be excited with light in a given wavelength. Accordingly, two images of the biopsy sample may be obtained. The first image is obtained in transmission bright-field mode by transmitting light through the sample. The second image is obtained in epi-fluorescence mode by exciting the fluorescent dye in the sample, and imaging the returned light emitted by the fluorescent dye. Optionally, a stage holding the intact biopsy sample may be moved laterally, and/or in a depth direction, to enable wider or more detailed scanning of the sample.

JP 2006 309 006 discusses a microscope system in which the filter unit is arranged in a common propagation path of the microscope during fluorescent photography, and is mechaniclly removed from the common propagation path at a time of bright-field imaging. Such microscopes can, however, be further improved.

### SUMMARY OF THE INVENTION

There is, therefore, a need to improve digital pathology imaging approaches.

The object of the present invention is solved by the subject-matter of the appended independent claims, wherein further embodiments are incorporated in the dependent claims.

According to a first aspect, there is provided a multi-mode imager for bright-field and fluorescent imaging. The multi-mode imager comprises:
- a bright-field light source configured to emit bright-field light having light of a first bright-field wavelength range through a sample area, a first excitation light source configured to emit excitation light having a first excitation wavelength range onto the sample area, an optical filter arrangement in an optical path from the sample area, wherein the optical filter arrangement is configured to allow bright-field light in the first bright-field wavelength range and fluorescence light in a first fluorescent emission wavelength range to pass, and to block light having a first excitation wavelength range, an image sensor in optical communication with the optical filter arrangement operable to convert the bright-field light and the fluorescence light to bright-field image data and/or fluorescence image data, and a controller operatively connected to the bright-field light source, the first excitation light source, and the image sensor.

The controller is configured to control the bright-field light source, the first excitation light source, and the image sensor to acquire bright-field image data during a first acquisition period and/or fluorescence image data during a second acquisition period.

Accordingly, the multi-mode imager according to the first aspect does not require a mechanical switching of filter elements into, or out of, and optical path of the multi-mode imager between a bright-field acquisition, and a fluorescence acquisition. This enables a reduced bill of materials.

Furthermore, the inertia of a mechanical filter actuator means that the acquisition of many bright-field and fluorescent images in a sequence is delayed by the repeated switching of mechanical filter. According to the first aspect, a multi-mode imager is provided enabling a rapid dual-mode imaging of a biopsy.

Furthermore, the bright-field and fluorescent images of the biopsy are obtained without moving a mechanism in the imager. The bright-field and fluorescent images are, thus, in a registered state immediately after acquisition. The application of complicated image registration algorithms to ensure that the bright-field and fluorescent images are in lateral alignment is not needed, or is at least significantly reduced.

Optionally, the first excitation wavelength range is a first excitation wavelength range.

Optionally, the multi-mode imager has a switching time between the first acquisition period using the bright-field light source and the second acquisition period using the first excitation light source selected from the group of: less than 100ms, less than 75ms, less than 50ms, less than 25ms, less than 10ms, or less than 5ms.

The acquisition time of a registered pair of bright-field images and fluorescent images of a biopsy is significantly reduced.

Optionally, the multi-mode imager further comprises:
- a second excitation light source configured to emit excitation light having a second excitation wavelength range onto the sample area, and/or a second bright-field light source configured to emit bright-field light having light of a second bright-field wavelength range through the sample area.

The optical filter arrangement is additionally configured to allow fluorescence light in the second fluorescent emission wavelength range to pass, and to block light having a second excitation wavelength range.

Accordingly, the multi-mode imager may accommodate complicated acquisition protocols in which different structures in the biopsy have been stained with two, three, or more fluorescent dyes, for example. A multi-mode imager according to the first aspect can acquire images using the plurality of fluorescent dyes in a reduced amount of time.

The multi-mode imager can further comprise three, four, five, or more excitation light sources, and/or three, four, five, or more bright-field light sources, to enable a wide range of fluorophores to be targeted in the same scan routine.

Optionally, the optical filter arrangement further comprises a first excitation filter positioned in the optical path of the first excitation light source, wherein the optical response of the first excitation filter corresponds to the first excitation wavelength range.

Accordingly, it may be ensured that only light having a wavelength relevant to exciting a given fluorescent dye applied to a biopsy reaches the surface of the biopsy.

Optionally, the optical filter arrangement further comprises an emission filter positioned in an optical path between the optical filter arrangement and the image sensor, wherein the emission filter is configured to prevent light in the first excitation wavelength range from reaching the image sensor.

Accordingly, an image sensor of the multi-mode imager is isolated from fluorescent dye excitation light, enabling an enhanced dynamic range of detection of the fluorescent emission from the biopsy.

Optionally, the optical filter arrangement further comprises a dichroic filter configured to guide light in the first excitation wavelength range towards the sample, and to allow fluorescence light of at least the first fluorescent emission wavelength to reach the image sensor.

Accordingly, a fluorescent excitation of a biopsy, and the acquisition of fluorescence emission image from the biopsy may be performed using substantially the same optical path.

Optionally the optical filter, first excitation filter, and/or dichroic filter have a first excitation wavelength range enabling light having a wavelength in a range 620 to 3000 nm to pass.

Accordingly, fluorescence emission dyes covering the visible spectrum, but preferably the red, near infrared, and middle infrared wavelength regions may be used to produce fluorescence emission images.

Optionally, the optical filter, excitation filter, and/or the dichroic filter have a first excitation wavelength range enabling light having wavelengths in a range of 620 to 750nm to pass.

Accordingly, fluorescence emission dyes covering the visible red region may be used to produce fluorescence emission images.

Optionally, the bright-field light and the fluorescence light propagate along a common optical path between the sample area and the image sensor.

Accordingly, the mechanical design of a multi-mode imager is simplified, because the need to use moving parts is reduced or eliminated.

Optionally, the bright-field image data and/or fluorescence image data is mutually pre-registered due to a sample stage remaining at a fixed depth and lateral position during the first and second acquisition periods.

Accordingly, complicated post-acquisition image processing algorithms for registration between the bright-field image and the fluorescence emission image do not need to be used, or are simplified, because the bright-field emission image and the fluorescence emission image of the same portion of a sample are already in substantially perfect alignment, because the sample is not moved between first and second acquisition periods.

Optionally, the multi-mode imager further comprises a movable stage drive configured to move a stage holding a sample in a depth direction of an optical path between the bright-field light source and the optical filter arrangement.

The controller is configured to illuminate the bright-field light source, to obtain first bright-field image data, to illuminate the first excitation light source, to obtain fluorescent dye data, and to move the stage holding the sample in the depth direction, to acquire a further set of bright-field image data and fluorescent dye data.

Accordingly, a wide range of lateral and depth regions of a biopsy may be imaged.

Optionally, the multi-mode imager is a digital microscope.

According to a second aspect, there is provided a method for operating a multi-mode imager to provide bright-field and fluorescent imaging. The method comprises:
a) emitting bright-field light having light of a first bright-field wavelength range through a sample area by activating a bright-field light source;
b) detecting the bright-field light using an image sensor after it has passed through an optical filter arrangement arranged in an optical path from the sample area, wherein the optical filter arrangement is configured to allow bright-field light in the first bright-field wavelength range and fluorescence light in a first fluorescent emission wavelength range to pass, and to block light having a first excitation wavelength range;
c) outputting bright-field image data;
d) emitting excitation light having a first excitation wavelength range onto the sample area by activating a first excitation light source;
e) detecting the fluorescence light in a first fluorescent emission wavelength range using the image sensor after it has passed through the optical filter arrangement; and
f) outputting fluorescence image data.

According to a third aspect, there is provided digital pathology system comprising a multi-mode imager for bright-field and fluorescent microscopy according to the first aspect and/or its optional embodiments, which, in operation, is configured to perform the method steps of the second aspect. The digital pathology system further comprises a user interface. The user interface is configured receive bright-field image data and fluorescence image data from the multi-mode microscope, and to display the bright-field image data and the fluorescence image data alone, or as a registered combination of images.

According to a fourth aspect, there is provided a computer program element for controlling a multi-mode imager according to one of the first aspect, which, when executed by a processing unit, is configured to carry out the method of the second aspect.

According to a fifth aspect, there is provided a computer readable medium having stored the computer program element of the fourth aspect.

In the following description, the term "multi-mode imager" is intended to define a means for obtaining a digital image of a portion of a biopsy. Preferably, the multi-mode imager is used to acquire both a bright-field image, and a fluorescence image, in sequence. However, it will be appreciated that a multi-mode imager capable of producing bright-field and fluorescence images may optionally be used in a single-image mode, in which only bright-field image, or in which only a fluorescence image, is generated. Preferably, the multi-mode imager may be embodied as a digital microscope, although other sorts of imagers, and custom-designed, hand-held, or other imaging systems could apply the approach discussed herein.

In the following description, the term "bright-field light source" refers to a light source, preferably an LED light source, optionally arranged on an opposite side of a biopsy sample to an imaging means (in the case of an inverted imaging system configuration). When the bright-field light source is actuated, its radiation (in the visible light range) penetrates completely through the biopsy, before continuing along an optical path to the imaging means. Typical narrowband LED source wavelengths for bright-field imaging are, for example, 430 nm, 530 nm, 590 nm, and 850 nm.

Optionally, a selectable combination of narrowband LED source wavelengths for bright-field sample imaging are provided. Optionally, the bright-field light source is provided as a filament lamp pre-filtered by an appropriate narrowband filter, or as a laser.

In the following description, the term "excitation light source" refers to a light source, preferably an LED light source, capable of providing excitation light matched to a fluorescent dye. For example, the dye "Alexa 350" supplied by ThermoFisher Scientific TM is a blue-fluorescent emitting dye having an excitation light frequency at 350 nm. Of course, the multi-mode imager may contain a plurality of excitation light sources each targeted to a different type of fluorescent dye. Optionally, the excitation light source is provided as a filament lamp, pre-filtered by a narrowband filter, or as a laser.

In the following description, the term "optical filter arrangement" refers to a means which is capable of enabling light in a first set of wavelength ranges to pass, and which can reject (significantly attenuate or reflect) light in a second set of a wavelength ranges. The optical filter arrangement is static in the imager during an acquisition.

More particularly, the optical filter arrangement is static (in the same position) during a first acquisition period in which bright-field image data is acquired, and during a second acquisition period when fluorescence image data is acquired. The optical filter arrangement is also static during a switching time between the first acquisition period and the second acquisition period.

The optical filter arrangement may optionally be provided as a dichroic mirror, or a half-mirror, treated with appropriate filter chemicals by spin coating, for example. The set of pass-wavelengths and reject-wavelengths of the optical filter arrangement is chosen to enable the bright-field source wavelength, and the fluorescence emission light, to pass through the optical filter arrangement, whilst substantially rejecting fluorescent dye excitation light. Of course, in cases where a plurality of bright-field wavelengths and/or fluorescence emission wavelengths exist, the optical filter arrangement has a plurality of pass bands.

In the following description, the term "image sensor" refers to an electronic element capable of converting the magnitude of light intensity incident on the element into electronic signals representative of the bright-field or fluorescence light received from the biopsy sample along an optical path between the image sensor and the biopsy. Such an image sensor is implemented using, for example, a charge-coupled device (CCD) or a CMOS imaging sensor, coupled to appropriate analogue and/or signal-processing circuitry.

In the following description, the term "controller" refers to a data processing element such as a microprocessor, microcontroller, field programmable gate array (FPGA), central processing unit (CPU), digital signal processor (DSP) capable of providing activation signals to the bright-field light source and the excitation light source, and capable of receiving digital image data from the image sensor, and transmitting the digital image data via the universal service bus (USB), a local area network connection (LAN), or another form of data connection.

Accordingly, a multi-mode imager is provided in which the optical path taken by emitted fluorescence light is substantially common to the path taken by bright-fleld light, such that an optical filter arrangement is compatible to both wavelengths, enabling the faster acquisition of bright-field light data and fluorescence image data without the use of mechanically moving parts. Accordingly, the emission wavelengths of the bright-field source, the bright-field source of spectral bandwidth, a fluorophore of choice, and the fluorescent emission filter is chosen to enable such a relationship.

It should be noted that, although described with respect to biopsy samples, the skilled person in the art will easily understand that the invention may be applied to many other types of sample. As a non-limitative example, the invention may provide the same advantages when used with bio-samples like mouth brains.

These, and other aspects of the present invention will become apparent from, and elucidated with reference to the embodiments described hereinafter.

### BRIEF DESCRIPTION OF THE DRAWINGS

Exemplary embodiments of the invention will be described with reference to the following drawings:
Fig 1 illustrates a prior art multi-mode image acquisition protocol.
Fig 2 illustrates a schematic of a multi-mode imager according to the first aspect.
Fig 3 illustrates a simplified acquisition protocol according to a second aspect.
Fig 4 illustrates a wavelength versus transmission magnitude characteristic of a set of fluorescence filters.
Fig 5 illustrates a wavelength versus magnitude characteristic for a set of fluorescence filters together with the emission characteristic of bright-field light sources.
Fig 6 illustrates a method for operating a multi-mode imager to provide bright-field and fluorescent imaging according to the second aspect.
Fig 7 illustrates a schematic view of a digital pathology system according to the third aspect.

### DETAILED DESCRIPTION OF EMBODIMENTS

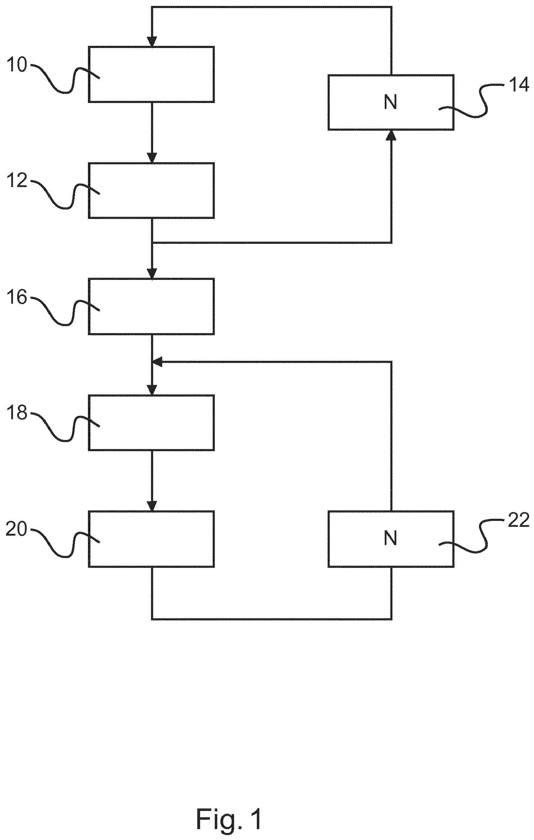

Figure 1 illustrates a prior art multi-mode image acquisition protocol in a typical depth scan (Z-scan) of a biopsy (sample) using a sequence of bright-field and a fluorescence emission imaging, in an image using a mechanical fluorescence filter movement. At step 10, a first Z motor movement of a motor capable of moving a sample stage holding biopsy in the depth direction moves a first layer of interest of the biopsy into the focal plane. As step 12, a bright-field light source is illuminated, and an image sensor acquires a first bright-field image of the biopsy sample at the first layer of interest. As shown at step 14, this process may be repeated a plurality of times until all depth layers of the biopsy have been imaged.

Having obtained a succession of bright-field images at different depths, it is necessary to obtain a matching succession of fluorescence images at different depths of the biopsy. As such, a biopsy which has been pre-treated with a fluorescent dye is illuminated with a matching fluorescence excitation light source. Typically, the strength of the fluorescent light emitted from the biopsy by the fluorescent dye is orders of magnitude smaller in brightness than the magnitude of the fluorescence excitation light source. Therefore, in a conventional imager, a fluorescence filter must be mechanically switched into an optical path in-between the biopsy and an imager to reject the fluorescent excitation light, and to enable the emitted fluorescence light to pass through the imager, enabling an improved dynamic range of detection of the fluorescence light.

As such, at step 16, a mechanical fluorescence filter movement of the conventional imager moves a fluorescent filter into the optical path in-between the biopsy and the imager. Similarly to the bright-field image acquisition sequence, at step 18, the Z-motor moves the sample stage into a first acquisition position, and acquires a first fluorescent biopsy image at step 20. The acquisition protocol of fluorescent biopsy images is repeated 22 until a set of fluorescent biopsy images, optionally matching to the set of depths of the bright-field images, is acquired.

The time duration of the Z-motor movement, and the fluorescent filter movement, is one of the most time-consuming operations. Accordingly, a multi-mode image acquisition protocol described above is relatively time-consuming, and requires an apparatus having mechanical moving parts. Because the sample stage is moved in-between bright-field and fluorescent image acquisition is at the same depth, there is a risk that mechanical inaccuracy in the Z-motor movement causes a bright-field image at a first depth to be acquired at a microscopic offset compared to its matching fluorescent image at the first depth (caused, for example, by microscopic levels of "backlash" in the Z-motor mechanism).

Accordingly, a prior-art multi-mode biopsy imaging techniques can be improved.

Using image processing, it is possible to detect and to visualise the 3-D apologies of a biopsy. Boundaries and internal cavities of biopsy material may be identified using a combination of bright-field and the fluorescence imaging. This means that a single staining can be used to image cancer cells within a biopsy, for example, and their growth pattern, and that the invasiveness can be assessed in comparison to the bright-field image, because cancer, for example, typically arises at the epithelial cell layers, which line tubili or ducts in a tissue.

When a "Z-stack" of bright-field and fluorescence images is captured, it is important that the process is rapid. There should be no movement in the sample during the process. Such movement can occur due to the movement of the sample stage, or sample between the two scans. If there is no movement, the bright-field and fluorescence images are fully overlapped (or registered) as a simple result of the acquisition, rather than via the application of further image-processing steps.

Applying registration to acquired bright-field and fluorescence image data is undesirable, because there is not a one-to-one mapping of intensities, or morphology, of matching voxels of the biopsy tissue in both "Z-stacks". Fluorescence emission has an intensity which is highest in tissue parts where the fluorescent stain has settled to the greatest extent. Bright-field radiation, on the other hand, has an absorptive nature. Therefore, for bright-field radiation, tissue parts that are thicker, or have a higher absorption coefficient, have a low intensity. This is observed for the entire biopsy, and not only for parts at which the fluorescent dye-containing substance has attached.

Accordingly, the intensity mapping of matching voxels in both "Z-stacks" is not uniform, and will vary over the 3-D position of the biopsy. Registration of images for volumes for which there is not a one-to-one intensity mapping, morphology, is complicated and still an unsolved problem.

The present application proposes a multi-image acquisition technique which records the bright-field and the fluorescence image in an interleaved manner. Therefore, it is known that the bright-field and fluorescence image are acquired and recorded at the same position. This enables the alignment of the bright-field and the fluorescence image to, for example, better than 10 µm in a relatively inexpensive system. To enhance the speed of acquisition, it is important that mechanical switching is avoided.

In conventional multi-mode images, the switching between the bright-field and the fluorescence mode is achieved via a mechanism which switches fluorescence imaging filters into, and out of, the optical path between the biopsy and the image detector.

Subsequently, a multi-mode imager is discussed having no moving parts, and which is time effective during an acquisition.

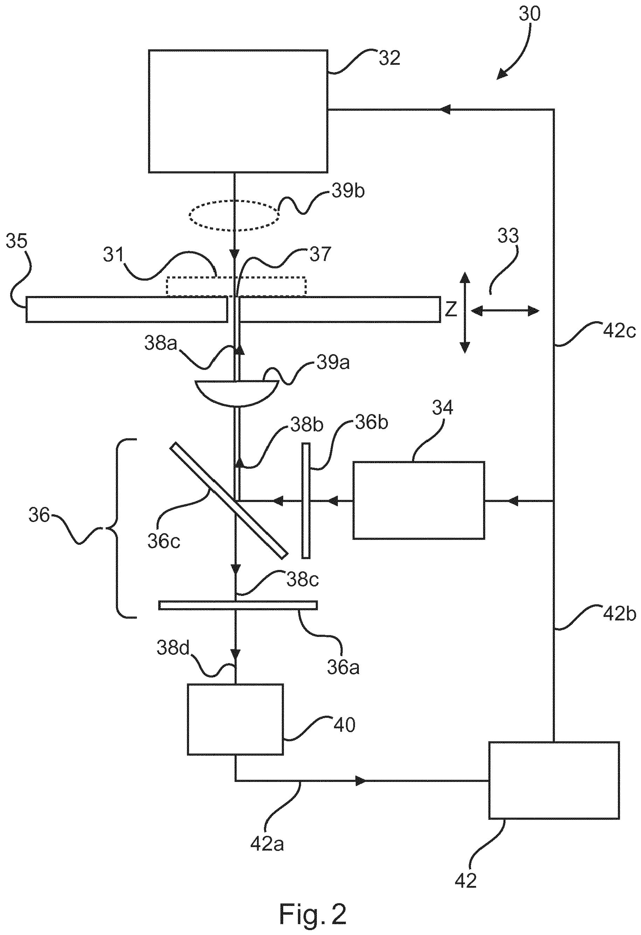

Figure 2 schematically illustrates a multi-mode imager in accordance with the first aspect.

The multi-mode imager 30 for bright-field and fluorescent imaging. The multi-mode imager comprises:
- a bright-field light source 32 configured to emit bright-field light having light of a first bright-field wavelength range through a sample area, a first excitation light source 34 configured to emit excitation light having a first excitation wavelength range onto the sample area, an optical filter arrangement 36, 36a, 36b, 36c in an optical path 38 from the sample area, wherein the optical filter arrangement 36, 36a, 36b, 36c is configured to allow bright-field light in the first bright-field wavelength range and fluorescence light in a first fluorescent emission wavelength range to pass, and to block light having a first excitation wavelength range.

The multi-mode imager comprises an image sensor 40 in optical communication with the optical filter arrangement operable to convert the bright-field light and the fluorescence light to bright-field image data and/or fluorescence image data, and a controller 42 operatively connected to the bright-field light source, the first excitation light source, and the image sensor.

The controller 40 is configured to control the bright-field light source, the first excitation light source, and the image sensor to acquire bright-field image data during a first acquisition period and/or fluorescence image data during a second acquisition period.

In figure 2, the multi-mode imager 30 in an inverted configuration is explained in context with other optional elements. The concept discussed in this application is also applicable to a non-inverted imager configuration.

Figure 2 shows a sample stage 35 which is optionally movable in the Z direction and/or the lateral direction by a motor drive 33.

Optionally, the z movement can be also be realized by moving the imaging objective lens 39a in the z direction with the stage still performing x-y movements.The sample stage 35 has a port 37 enabling an optical path to pass through a portion of the sample stage 35. A biopsy (sample) 31 may be placed on the sample stage of 35. A bright-field light source 32 is arranged to illuminate the biopsy on the sample stage 35. Opposite to the bright-field light source 32 is provided an image sensor 40 in optical communication with the bright-field light source 32 along an optical path 38a, 38b, 38c, 38d. Additional lenses may be provided in the optical path 38a, 38b, 38c, 38d, such as a condenser lens 39b in-between the bright-field source and the sample, or polarisers (not shown), however, it will be appreciated that such additional lenses are not essential to solving the present technical problem.

An optical filter arrangement 36 is provided in the optical path 38a, 38b, 38c, 38d. As such, the wavelength content of a light beam at optical path segment 38b is different to the wavelength content of a light beam at optical path segment 38d. As illustrated, the optical filter arrangement comprises a dichroic filter 36c (this may, optionally be replaced with a half-mirror), an excitation filter 36b, and an emission filter 36a, however this combination of elements is not essential.

A first excitation light source 34 is provided such that it emits excitation light, which is optionally filtered by a narrowband excitation light filter 36b, towards dichroic mirror 36c. The dichroic mirror 36c is configured to redirect the excitation light along optical path 38b and 38a wherein it interacts with fluorescent dye in the biopsy 31. This causes a fluorescence light to be emitted back along optical path 38a, 38b, and to propagate through the dichroic mirror 36c. This is possible because the dichroic mirror 36c is treated with a filter material that enables the fluorescence light emitted from the sample 31 to pass through it. The fluorescence light continues along optical path 38c, and through optional emission filter 36a. The function of the emission filter 36a is to filter light wavelengths of the excitation light, to prevent the excitation light from reaching the image sensor 40.

As such, when the bright-field light source is activated, the bright-field light travels along a common optical path 38, 38a, 38b, 38c, 38d to the fluorescence light.

Accordingly, in the illustrated example, the bright-field and the fluorescent path share the objective lens 39a, the dichroic 36c, and the emission filter 36a. The dichroic 36c and the emission filter 36a are, in this illustrated example, chosen to pass a common range of wavelengths.

The optical filter arrangement 36 is configured to allow bright-field light in a first bright-field wavelength range, and fluorescence light in a first fluorescent emission wavelength range to pass, and to block light having a first excitation wavelength range.

The controller 42 is connected via a data connection 42a to the image sensor 40 to receive image data from a bright-field image acquisition cycle, or a fluorescent imaging cycle respectively. The controller 42 is connected to excitation light source 34, and bright-field light source 32 via control connections 42b and 42c. Optionally, the controller is connected to a movable stage drive 33.

Optionally, in the optical path 38 illustrated, the lens, dichroic filter 36c, and fluorescence emission filter 36a are common for both the bright-field and the fluorescence path, enabling the bright-field light to pass through the dichroic filter as well as through the emission filter.

Optionally, the dichroic filter 36c is replaced by an optical component that has partial transmission, and partial reflection. For example, a half mirror that reflects half of the impinging light and transmits the rest may be used.

In operation, controller 42 activates the bright-field light source 32 by sending a control signal along control connection 42b and 42c. Bright-field light source 32 is illuminated, transmitting a beam of bright-field light as a first bright-field wavelength through a biopsy (sample) 31 held on the sample stage 35. The bright-field light passes through the port 37 of the sample stage 35, passing through objective lens 39a, and then passing through an optical filter arrangement optionally comprising dichroic 36c, and emission filter 36a and finally meeting the image sensor 40. The image sensor 40 converts the bright-field light into bright-field image data, which transmits along data bus 42a to the controller.

When the controller detects that it has received a stable bright-field light source reading and successfully received the image data, it generates a signal to turn off the bright-field light source 32. Then, it generates a signal to turn on the fluorescence excitation source 34. Excitation light propagates through excitation filter 36b, and is reflected from the angled dichroic filter 36c along optical path 38b, optionally through objective lens 39a, along optical path 38a, through port 37 in the sample stage 35, where the excitation light illuminates fluorophores in a stain in the biopsy 31. An epifluorescent emission reaction causes fluorescence light to be emitted from the biopsy 31 back through the port 37 of the sample stage 35. The fluorescence light propagates through objective 39a, and along optical path 38b, through dichroic filter 36c, through emission filter 36a, wherein the fluorescence light travels long optical path 38d and is received at the image sensor 40. The image sensor 40 captures a subsequent set of fluorescence image data, and transmitted along data bus 42a to controller 42.

In the previous functional description, it will be appreciated that the excitation light source 34 may be activated prior to the bright-field light source 32. The precise order of operations as described above is not essential. Alternatively, the multi-mode image may be used in a single-image mode, wherein exclusively bright-field data, or exclusively fluorescence image data is obtained for specific sample.

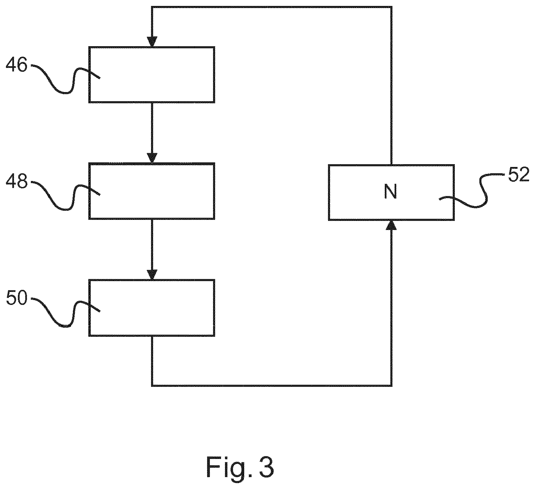

Figure 3 illustrates a simplified, exemplary, acquisition protocol made possible with a multi-mode imager according to the first aspect, in an embodiment where the sample stage is movable with a movable stage drive 33.

In a first step 46, the movable stage drive 33 moves the sample stage 31 into a new position. At second step 48, a bright-field image data acquisition of the biopsy is performed. At first step 50, a fluorescent image data acquisition is made.

Notably, for the acquisition of one pair of bright-field and fluorescence image data, no mechanical movement is required in the imager.

At step 52, the sample stage 35 may be moved in a depth direction (Z) and/or in a lateral direction to image a new part of the biopsy. Following the movement, steps 48 and 50 are repeated. This acquisition may be repeated an arbitrary (N) number of times until a satisfactory portion of the biopsy has been imaged. Notably, there is no step of mechanically moving a filter in-between the bright-field acquisition step 48 and the fluorescence acquisition image step 50. Typically, the number of iterations (N) is large, and thus a saving of 2N mechanical movements associated with moving a filter is possible.

Optionally, the multi-mode imager has a switching time between the first acquisition period using the bright-field light source and the second acquisition period using the first excitation light source selected from the group of: less than 100ms, less than 75ms, less than 50ms, less than 25ms, less than 10ms, or less than 5ms.

The first acquisition period may, optionally, the defined as the time between initialisation of the bright-field light source by the controller, and the point at which the bright-field image data is received by the controller. The second acquisition period may, optionally, be defined as the time between initialisation of the excitation light source by the controller, and point at which the fluorescence image data is received by the controller.

Accordingly, a switching time may optionally be defined as the time between the controller receiving the bright-field image data, and the initialisation of the excitation light source.

It will be appreciated that in the simplest form, the optical filter arrangement 36 should be able to pass one bright-field light wavelength, one fluorescence light emission wavelength, and to reject one first excitation light wavelength. However skilled person will understand that with a careful choice of dyes in the biopsy, and filter materials in the optical filter arrangement, a plurality of bright-field sources and fluorescent emission wavelengths (for different dies) may be accommodated, whilst rejecting the fluorescent excititation light.

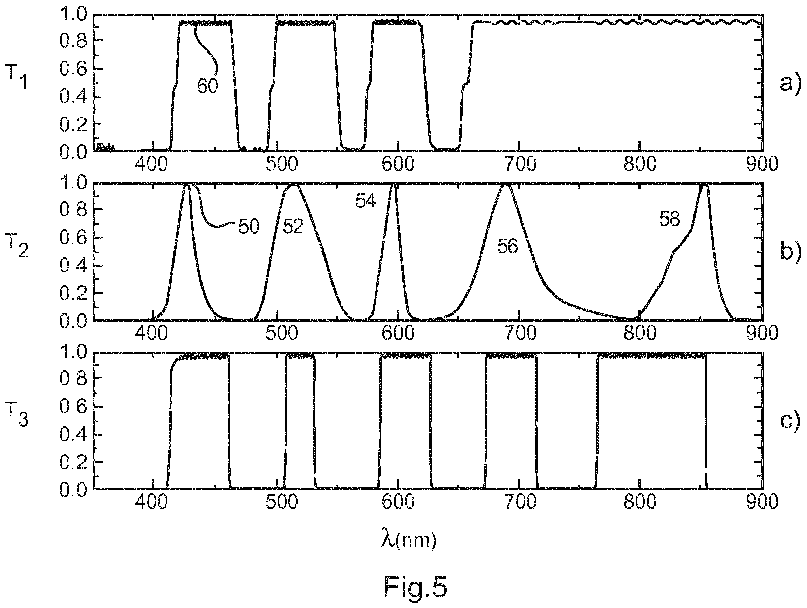

Turning now to examples of dye choices for a multi-mode imager according to the first aspect:
In a first example, a dye of choice that would pass in the fourth channel of the emission filter is, for example, C5 indocyanine, Atto 647, Atto 647N, and/or Alexa 660. This die when imaged by fluorescent excitation can be combined with bright-field imaging via all the channels, using appropriate LED sources. For example, LED sources having emission wavelengths of 430 nm, 530nm, 590nm, and 850nm could be used. This is as illustrated in Figure 5.

In a second example, a dye of choice that would pass in the third channel of the emission filter is, for example, Atto 565, Alexa 568. This die imaged by fluorescent excitation can be combined with bright-field imaging via all the channels, using appropriate LED sources having emission wavelengths of 430 nm, 530nm, 590nm, and 850nm.

In a third example, a dye of choice that would pass in a second channel of the emission filter is, for example, C3 oxycyanine, Atto 488, Alexa 465. This dye image by fluorescent excitation can be combined with bright-thing imaging via all the channels, using appropriate LED sources, for example LEDs having emission wavelengths of 430 nm, 530nm, 590nm, and 850nm.

The fourth example, a dye of choice I would pass in the first channel of the emission filter is, for example, Alexa 350. This dye imaged using fluorescent excitation can be combined with bright-field imaging via all the channels, using appropriate LED sources, for example LEDs having emission wavelengths of 430 nm, 530nm, 590nm, and 850nm.

A skilled person will appreciate that other dyes and LED combinations are also possible.

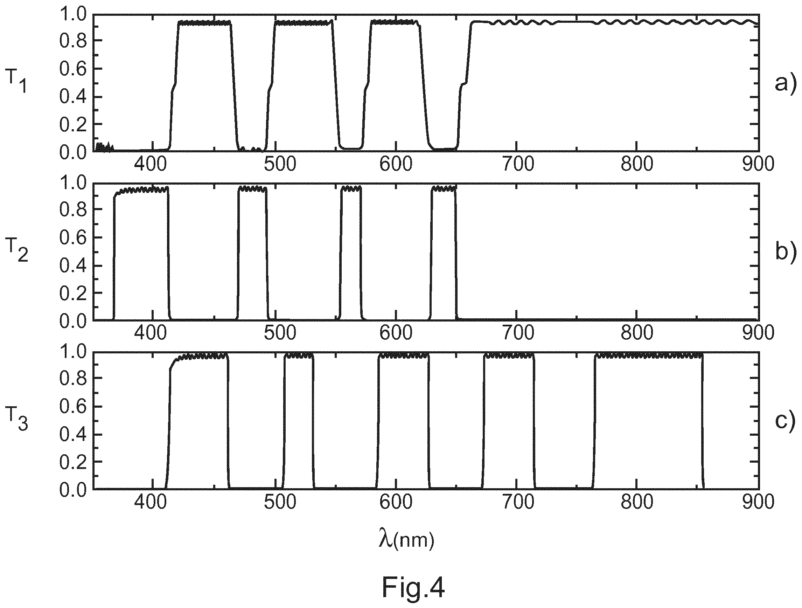

Figure 4 illustrates three transmission characteristics of an exemplary set of fluorescence filters.

In figure 4, the independent variable axes represent wavelengths in nanometres. The three dependent variable axes each represent transmission characteristics T₁, T₂, and T₃, normalised to unit magnitude, of three different fluorescent filters, respectively.

In the example of figure 4, the filters are standard filters. Custom filters can be made in any desired wavelength configuration.

The transmission characteristic of figure 4 a) shows a filter which is treated to enable passbands for light having a wavelength of approximately 410 nm to 570 nm, 495 nm to 550 nm, 560 nm to 625 nm, and above 660 nm.

The transmission characteristic of figure 4 b) shows a filter which is treated to enable passbands for light having a wavelength of approximately 360 nm to 410 nm, 470 nm to 495 nm, 555 nm to 565 nm, and 625 nm to 650 nm.

The transmission characteristic of figure 4 c) shows a filter which is treated to enable passbands for light having a wavelength of approximately 410 nm to 460 nm, 505 nm to 545 nm, 590 nm to 625 nm, 675 nm to 720 nm, and 760 nm to 855 nm.

Of course, in a low-complexity example, a filter may be provided with a single fluorescent passband, for example between 410 nm and 570 nm.

The graphs of figure 5) illustrate a fluorescence filter T₁ in combination with a plurality of bright-field light sources T₂. The bright-field light sources have emission peaks at 430 nm 50, 530 nm 52, 590 nm 54, 660 nm 56, and 850 nm 58.

Taking, as an example, a case where a fluorescence filter T₁ having a passband in the 410 nm to 570 nm 60 range is paired with a bright-field light source T₂, such as a light-emitting diode, having an emission peak at 430 nm, and wherein it is assumed that the excitation light of the fluorophore lies outside the range 410 nm to 570 nm, it can be appreciated that the fluorescence filter will enable light emitted from the fluorescent dye of a biopsy to pass, and the bright-field light. Excitation light lying outside the range of the passband 60 will be rejected.

The skilled person will recognise that many combinations of brightfield light peak wavelength and fluorescence filter passband may be provided. For example, one, two, three, four, or five bright-field light wavelengths may be targeted, provided the fluorescence filter is provided with corresponding passbands.

The fluorescence filter discussed above would, for example, be implemented in the optical filter arrangement discussed above, and/or as the dichroic filter, for example.

In figure 5, T₃ demonstrates a transmission characteristic identical to that of figure 4 c) for comparison to show the compatibility between the LEDs of choice and the associated filters.

Accordingly, by carefully considering for each flurophore of choice the interrelationship between a bright-field source, an optical filter arrangement such as a dichroic mirror, and the fluorescent emission filter, a multi-mode imager which does not require a mechanically mobile filter may be provided. The use of multiple bandpass filters mean that is it is possible to apply the present technique with multiple bands of bright-field light and fluorescent light.

Optionally, the bright-field source is a narrow-band source, such as a light-emitting diode, or a laser. LEDs can be designed to emit a specific narrow-band wavelength (a dominant colour). For example, a red LED emitting at 634 nm having a full width half maximum (FWHM) of 16 nm is an example of a narrow-band LED.

Optionally, the bright-field source has a FWHM in the range of lower than 100 nm, lower than 50 nm, lower than 25 nm, lower than 10 nm, lower than 5 nm, lower than 1 nm.

According to a second aspect, there is provided a method for operating a multi-mode imager to provide bright-field and fluorescent imaging. The method comprises:
a) emitting 70 bright-field light having light of a first bright-field wavelength range through a sample area by activating a bright-field light source;
b) detecting 72 the bright-field light using an image sensor after it has passed through an optical filter arrangement arranged in an optical path from the sample area, wherein the optical filter arrangement is configured to allow bright-field light in the first bright-field wavelength range and fluorescence light in a first fluorescent emission wavelength range to pass, and to block light having a first excitation wavelength range;
c) outputting 74 bright-field image data;
d) emitting 76 excitation light having a first excitation wavelength range onto the sample area by activating a first excitation light source;
e) detecting 78 the fluorescence light in a first fluorescent emission wavelength range using the image sensor after it has passed through the optical filter arrangement; and
f) outputting 80 fluorescence image data.

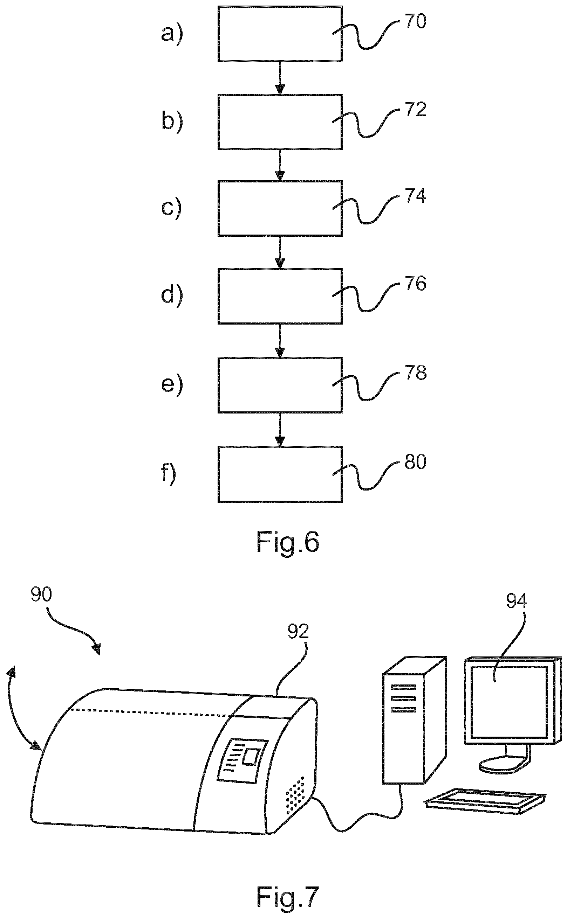

Figure 6 illustrates a method according to the second aspect.

It will be appreciated that in the method of the second aspect, the step of emitting bright-field light and detecting bright-field light using the image sensor may be performed after or before the step of detecting the fluorescence light.

Optionally, there are provided the further acquisition steps:
e1) adjusting a position of a stage holding a sample in a depth direction, and/or in a lateral direction of an optical path between the bright-field light source and the optical filter element using a movable stage drive;
e2) acquiring a second set of bright-field image data and fluorescence image data.

Optionally, steps e1) and e2) are iterated until bright-field light data and fluorescence image data of a biopsy (sample) has been obtained in substantially the entire depth direction, and/or lateral direction of a biopsy.

According to a third aspect, there is provided digital pathology system 90 comprising:
- a multi-mode imager 92 for bright-field and fluorescent microscopy as discussed in the first aspect, which, in operation, is configured to perform the method steps of the second aspect, and
- a user interface 94.

The user interface 94 is configured receive bright-field image data and fluorescence image data from the multi-mode microscope, and to display the bright-field image data and the fluorescence image data alone, or as a registered combination of images.

Accordingly, the user interface may optionally be provided as a personal computer (PC) connected to the multi-mode imager using a USB connection, or over a local area network (LAN), for example. The personal computer is configured to execute image-processing software to display the bright-field image data and/or the fluorescence image data.

According to a fourth aspect, there is provided a computer program element for controlling amulti-mode imager according to one of the first aspect, which, when executed by a processing unit, is configured to carry out the method of the second aspect.

According to a fifth aspect, there is provided a computer readable medium having stored the computer program element of the fourth aspect.

A computer program element might therefore be stored on a computer unit, which might also be an embodiment of the present invention. This computing unit may be adapted to perform or induce performance of the steps of the method described above. Moreover, it may be adapted to operate the components of the above-described apparatus. The computing unit can be adapted to operate automatically and/or to execute orders of a user. A computer program may be loaded into a working memory of a data processor. The data processor may thus be equipped to carry out the method of the invention.

This exemplary embodiment of the invention covers both the computer program that has the intervention installed from the beginning, and a computer program that by means of an update turns an existing program into a program that uses the invention.

A computer program may be stored and/or distributed on a suitable medium, such as optical storage media, or a solid state medium supplied together with, or as a part of other hardware, but may also be distributed in other forms, such as via the Internet or other wired or wireless telecommunication systems. However, the computer program may also be presented over a network like the World Wide Web, and can also be downloaded into the working memory of a data processor from such a network. The image processing method according to the second aspect would then be performed on the
According to a further exemplary embodiment of the present invention, a medium for making a computer program element available for downloading is provided, which computer program element is arranged to perform a method according to one of the previously described embodiments of the invention.

It should to be noted that embodiments of the invention are described with reference to different subject-matters. In particular, some embodiments are described with reference to method-type claims, whereas other embodiments are described with reference to device-type claims. However, a person skilled in the art will gather from the above, and the following description that, unless otherwise notified, in addition to any combination of features belonging to one type of subject-matter, also other combinations between features relating to different subject-matters is considered to be disclosed with this application.

All features can be combined to provide a synergetic effect that is more than the simple summation of the features.

While the invention has been illustrated and described in detail in the drawings and foregoing description, such illustration and description are to be considered illustrative or exemplary, and not restrictive. The invention is not limited to the disclosed embodiments.

Other variations to the disclosed embodiments can be understood, and effected by those skilled in the art in practicing the claimed invention, from a study of the drawings, the disclosure, and the dependent claims.
In the claims, the word "comprising" does not exclude other elements or steps, and the indefinite article "a" or "an" does not exclude a plurality. A single processor, or other unit, may fulfil the functions of several items recited in the claims. The mere fact that certain measures are recited in mutually different dependent claims does not indicate that a combination of these measures cannot be used to advantage. Any reference signs in the claims should not be construed as limiting the scope.

## Claims

1. A multi-mode imager (30) for bright-field and fluorescent imaging, comprising:
- a bright-field light source (32) configured to emit bright-field light having light of a first bright-field wavelength range through a sample area (31);
- a first excitation light source (34) configured to emit excitation light having a first excitation wavelength range onto the sample area;
- an optical filter arrangement (36, 36a, 36b, 36c) in an optical path from the sample area, wherein the optical filter arrangement is configured to allow bright-field light in the first bright-field wavelength range and fluorescence light in a first fluorescent emission wavelength range to pass, and to block light having a first excitation wavelength range;
- an image sensor (40) in optical communication with the optical filter arrangement operable to convert the bright-field light and the fluorescence light to bright-field image data and/or fluorescence image data;
- a controller (42) operatively connected to the bright-field light source, the first excitation light source, and the image sensor; and
wherein the controller is configured to control the bright-field light source, the first excitation light source, and the image sensor to acquire bright-field image data during a first acquisition period and/or fluorescence image data during a second acquisition period.

2. The multi-mode imager (30) according to claim 1,
wherein a switching time between the first acquisition period using the bright-field light source (32) and the second acquisition period using the first excitation light source (34) is selected from the group of: less than 100ms, less than 75ms, less than 50ms, less than 25ms, less than 10ms, or less than 5ms.

3. The multi-mode imager (30) according to claims 1 or 2, further comprising:
- a second excitation light source configured to emit excitation light having a second excitation wavelength range onto the sample area; and/or a second bright-field light source configured to emit bright-field light having light of a second bright-field wavelength range through the sample area;
wherein the optical filter arrangement (36, 36a, 36b, 36c) is additionally configured to allow fluorescence light in the second fluorescent emission wavelength range to pass, and to block light having a second excitation wavelength range.

4. The multi-mode imager (30) according to one of the preceding claims,
wherein the optical filter arrangement (36, 36a, 36b, 36c) comprises a first excitation filter (36b) positioned in the optical path of the first excitation light source, wherein the optical response of the first excitation filter corresponds to the first excitation wavelength range, and/or wherein the optical filter arrangement comprises an emission filter (36a) positioned in an optical path (38c, 38d) leading to the image sensor (40), wherein the emission filter is configured to prevent light in the first excitation wavelength range from reaching the image sensor (40).

5. The multi-mode imager (30) according to one of the preceding claims,
wherein the optical filter arrangement (36, 36a, 36b, 36c) comprises a dichroic filter (36a) configured to guide light in the first excitation wavelength range towards the sample, and to allow fluorescence light of at least the first fluorescent emission wavelength to reach the image sensor (40).

6. The multi-mode imager (30) according to one of the preceding claims,
wherein the optical filter arrangement (36, 36a, 36b, 36c), first excitation filter (36b), and/or dichroic filter (36c) have a first excitation wavelength range enabling light having a wavelength in a range 620 to 3000 nm to pass.

7. The multi-mode imager (30) according to one of the preceding claims,
wherein the optical filter arrangement (36, 36a, 36b, 36c), excitation filter (36b), and/or the dichroic filter (36c) have a first excitation wavelength range enabling light having wavelengths in a range of 620 to 750nm to pass.

8. The multi-mode imager (30) according to one of the preceding claims,
wherein the bright-field light and the fluorescence light propagate along a common optical path (38a, 38b, 38c, 38d) between the sample area (31) and the image sensor (40).

9. The multi-mode imager (30) according to one of the preceding claims,
wherein the bright-field image data and/or fluorescence image data is mutually pre-registered due to a sample stage (31) remaining at a fixed depth and lateral position during the first and second acquisition periods.

10. The multi-mode imager (30) according to one of the preceding claims, further comprising:
- a movable stage drive (33) configured to move a stage (35) holding a sample in a depth direction of an optical path (38a, 38b, 38c, 38d) between the bright-field light source and the optical filter arrangement; and
wherein the controller is configured to illuminate the bright-field light source (32), to obtain first bright-field image data, to illuminate the first excitation light source (34), to obtain fluorescent dye data, and to move the stage holding the sample in the depth direction, to acquire a further set of bright-field image data and fluorescent dye data.

11. The multi-mode imager (30) according to one of the preceding claims, wherein the multi-mode imager is a digital microscope.

12. A method for operating a multi-mode imager to provide bright-field and fluorescent imaging, comprising:
a) emitting (70) bright-field light having light of a first bright-field wavelength range through a sample area by activating a bright-field light source;
b) detecting (72) the bright-field light using an image sensor after it has passed through an optical filter arrangement arranged in an optical path from the sample area, wherein the optical filter arrangement is configured to allow bright-field light in the first bright-field wavelength range and fluorescence light in a first fluorescent emission wavelength range to pass, and to block light having a first excitation wavelength range;
c) outputting (74) bright-field image data;
d) emitting (76) excitation light having a first excitation wavelength range onto the sample area by activating a first excitation light source;
e) detecting (78) the fluorescence light in a first fluorescent emission wavelength range using the image sensor after it has passed through the optical filter arrangement; and
f) outputting (80) fluorescence image data.

13. A digital pathology system (90) comprising:
- a multi-mode imager (92) for bright-field and fluorescent microscopy as claimed in one of claims 1 to 11, which, in operation, is configured to perform the method steps of claim 12, and
- a user interface (94);
wherein the user interface is configured receive bright-field image data and fluorescence image data from the multi-mode microscope, and to display the bright-field image data and the fluorescence image data alone, or as a registered combination of images.

14. A computer program element for controlling a multi-mode imager according to one of claims 1 to 11, which, when executed by a processing unit, is configured to carry out the method of claim 12.

15. A computer readable medium having stored the computer program element of claim 14.
